(19) Europäisches Patentamt

European Patent Office

Office européen des brevets

(11) **EP 1 681 563 A1**

(12) **EUROPÄISCHE PATENTANMELDUNG**

(43) Veröffentlichungstag:
19.07.2006 Patentblatt 2006/29

(51) Int Cl.:
*G01N 27/00* (2006.01)

(21) Anmeldenummer: 06000824.0

(22) Anmeldetag: **16.01.2006**

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 17.01.2005 DE 102005002293

(71) Anmelder: **Wicinski, Mariusz**
40699 Erkrath (DE)

(72) Erfinder:
• **Dora, Jerzy**
**51 311 Wroclaw (PL)**
• **Krucinski, Krzysztof**
**40479 Düsseldorf (DE)**
• **Wincinski, Mariusz**
**40699 Erkrath (DE)**

(74) Vertreter: **Tilmann, Max Wilhelm et al**
**König Szynka Tilmann von Renesse**
**Patentanwälte Partnerschaft**
**Postfach 11 09 46**
**40509 Düsseldorf (DE)**

(54) **Verfahren und Vorrichtung zum Untersuchen einer Metalloberfläche**

(57) Die Erfindung betrifft ein Verfahren zum Untersuchen einer Metalloberfläche, wobei eine Schwingung zwischen einer Bezugselektrode und der Metalloberfläche erzeugt wird, an einen die durch die der Metalloberfläche gegenüberliegend angeordnete Bezugselektrode gebildete Kapazität enthaltenen Stromkreis eine Wechselspannung angelegt wird, als Messsignal der zeitliche Spannungsverlauf in dem Stromkreis gemessen wird und aus dem Spannungsverlauf das Volta-Potential zwischen der Metalloberfläche und der Bezugselektrode und/oder der Abstand der Bezugselektrode zur Metalloberfläche ermittelt wird.
Die Erfindung betrifft ebenfalls eine entsprechende Vorrichtung zum Untersuchen einer Metalloberfläche.

Fig.1

EP 1 681 563 A1

**Beschreibung**

Die Erfindung betrifft ein Verfahren und eine Vorrichtung zum Untersuchen einer Metalloberfläche und nimmt die Priorität der deutschen Patentanmeldung 10 2005 002 293.6 in Anspruch, auf die inhaltlich Bezug genommen wird.

Aus EP 0 485 584 B1 ist es bekannt, sogenannte Kelvin-Sonden zur Messung von Austrittspotentialen zu verwenden. Werden zwei verschiedene Metalle leitend miteinander verbunden, so fließen Elektronen vom einen Metall in das andere, bis ein Ausgleich des Fermi-Niveaus stattgefunden hat. Durch den Elektronenübergang wird eine Volta-Potentialdifferenz zwischen den beiden Metallen erzeugt. Lässt man nun das eine Metall in Bezug auf das andere schwingen, so resuliert bei konstanter Volta-Potentialdifferenz ein Wechselstrom in der leitenden Verbindung zwischen den beiden Metallen, da sich mit der Schwingung die Kapazität zwischen beiden Metallen ändert. Wird eine zusätzliche Spannungsquelle zwischen beiden Metallen geschaltet, so können die Fermi-Niveaus derart verschoben werden, dass in den Metallen keine Überschussiadung mehr vorhanden ist. Dann ist der Wechselstrom gleich Null und der Betrag der angelegten Spannung gleich der Volta-Potentialdifferenz. Zur Ermittlung der Volta-Potentialdifferenz muss nach EP 0 485 584 B1 die Überschussladung in den beiden Metallen ermittelt und die durch die zusätzliche Spannungsquelle angelegte Spannung so eingestellt werden, dass keine Überschussladung mehr vorhanden ist. Hierfür ist insbesondere der Einsatz eines aufwendigen und teuren Log-In-Verstärkers sowie weiterer aufwendiger elektronischer Bauelemente notwendig.

Um die Potentialdifferenz zu messen, ist es notwendig, eine kontaktfreie Messmethode anzuwenden, die in der Lage ist, die gesamte im System vorhandene Ladung zu messen, ohne sie zu verändern. Die vibrierende Kondensatortechnik stellt eine solche kontaktfreie Messmethode dar.

Es hat sich gezeigt, dass bei dem aus EP 0 485 584 61 angewendeten Verfahren ein sehr schlechtes Signal/Rausch-Verhältnis besteht und somit keine präzisen Messungen möglich sind. Um die Messgenauigkeit zu verbessem, muss hier mit sehr langer Integrationszeit (ca. 1s) gearbeitet werden, was die Messdynamik stark begrenzt. Diese Dynamik stellt allerdings einen wichtigen Parameter bei den Scanning-Messmethoden dar.

Baikie hat in Rev. Sci. Instrum., Vol. 69, No. 11, November 1998. ein diskretes Potential eingeführt, das zwischen einem Bezugspotential und eine Probe angelegt wird und für Bestimmung von Höhe und Kontaktpotential $V_{CPT}$ dient. Das diskrete Potential wird aufgrund der Stelle, an der es angelegt wird, auch Backirtg-Potential $V_b$ genannt.

Baikie verwendet ein diskretes, stufenartiges Signal, um die Abhängigkeit

$$V_{SKP} = aV_b + V_{CPT}$$

zu bestimmen.

Vor diesem Hintergrund liegt der Erfindung die Aufgabe zugrunde, ein Verfahren und eine Vorrichtung zum Untersuchen einer Metalloberfläche bereitzustellen, die mit geringem apparativen Aufwand präzise Messungen erlauben.

Diese Aufgabe wird durch das Verfahren und die Vorrichtung zum Untersuchen einer Metalloberfläche_gemäß den nebengeordneten Ansprüchen gelöst. Vorteilhafte Ausgestattungen sind in den Unteransprüchen angegeben.

Die Erfindung baut auf den aus dem Stand der Technik bekannten Verfahren auf, durch Schwingung zwischen einer Bezugselektrode und der Metalloberfläche in einem die Bezugselektrode und Metalloberfläche verbindenden Stromkreis eine Kapazität zu bilden, deren Kapazität durch die Schwingung zwischen der Bezugselektrode und der Metalloberfläche zeitlich variiert. Die Erfindung geht jedoch von dem Grundgedanken aus, ein zu dem Volta-Potential der Bezugselektrode und der Metalloberfläche abhängiges Signal und/oder den Abstand der Bezugselektrode zur Metalloberfläche aus der Analyse des zeitlichen Spannungsverlaufs in diesem Stromkreis zu ermitteln, an den erfindungsgemäß eine Wechselspannung angelegt wird.

Durch das Anlegen einer überlagerten Wechselspannung an den Stromkreis entsteht in diesem ein zeitlicher Spannungsverlauf, der den durch die Kapazitätsänderung der zwischen Bezugselektrode und Metalloberfläche gebildeten Kapazität Erzeugten enthält sowie diesem überlagert den zeitlichen Spannungsverlauf der überlagerten Wechselspannung enthält. Die überlagerte Wechselspannung gibt dem Messsignal dabei eine gut analysierbare Form, insbesondere wenn der Spannungswechsel der überlagerten Wechselspannung regelmäßig erfolgt, beispielsweise wenn die überlagerte Wechselspannung einen $\sin(\omega_2 t)$-term enthält, wobei $w_2$ die Schwingfrequenz des die Kapazität enthaltenden Stromkreises (Innenkreis) ist.

Als Bezugselektrode (Messsonde) wird bevorzugt eine nadelförmige Sonde aus Edelstahl oder Platin eingesetzt. Die Bezugselektrode ist insbesondere bevorzugt resistent gegen Umwelteinflüsse und besitzt eine höhere Austrittsarbeit als einfache Metalle.

Die zu untersuchende Metalloberfläche kann beschichtet sein, beispielsweise eine Polymerbeschichtung oder eine Farb- bzw. Lackschicht aufweisen.

In einer bevorzugten Ausführungsform wird zum Erzeugen der Schwingung zwischen der Bezugselektrode und der Metalloberfläche die Bezugselektrode relativ zu einer in Richtung auf die Bezugselektrode festgelegten Metalloberfläche bewegt. Die Metalloberfläche ist jedoch bevorzugt antiparallel zur Achse der Schwingung bewegbar, um die Bezugselektrode verschiedenen Oberflächensegmenten der Metalloberfläche gegenüberliegend anordnen zu können.

Es hat sich für die präzise Analyse des aufgenommenen Messsignals als zweckmäßig erwiesen, wenn die Bezugselektrode durch einen Schwingantrieb zu einer einen Sinus-term aufweisenden Schwingung angeregt wird. Insbesondere bevorzugt wird an eine zur Schwingungsanregung im Bereich der beweglich gelagerten Bezugselektrode angeordneten Spule eine zu $\sin(\omega_1 t)$ proportionale Spulenspannung angelegt, wobei $\omega_1$ die Schwingfrequenz eines die Spule aufweisenden Außenkreises ist. Insbesondere bevorzugt ist die Spulenspannung derart $V = V_{SKP} \times \sin(\omega_1 t) + V_{offset}$. Der Term $V_{SKP}$ beeinflusst die Schwingungsamplitude der Bezugselektrode, während der Term $V_{offset}$ die Mittelstellung der schwingenden Spule in Richtung auf die Metalloberfläche hin oder von der Metalloberfläche fort beeinflusst und somit die allgemeine Lage der Bezugselektrode relativ zur Metalloberfläche beeinflusst. Über das Einstellen von $V_{offset}$ (erster Offset-Faktor) kann somit beispielsweise die Mittellage der Bezugselektrode an einen erkannten Oberflächenverlauf angepasst werden, und dieser Oberflächenverlauf unter Konstanthattung des mittleren Abstands zwischen Bezugselektrode und Metalloberfläche nachgefahren werden.

Ein Peaksignal kann durch Auffinden und Verbinden der Spitzen des modulierten Messsignals erzeugt werden. Hierdurch wird aus dem höher frequenten Messsignal ein niederfrequentes Peaksignal erzeugt, das auch als Umhüllungssignal des Messsignals verstanden werden kann.

Das Peaksignal bzw. das integrierte Peaksignal kann geglättet werden. Hierdurch wird insbesondere die Verarbeitung des Signals vereinfacht.

In einem weiteren Analyseschritt kann als erster Analysewert eine erste Spitze des integrierten Peaksignals ermittelt werden und als zweiter Analysewert eine auf die erste Spitze folgende zweite Spitze ermittelt werden, wenn das Peaksignal zwischen der ersten Spitze und der zweiten Spitze eine Unstetigkeit aufweist, oder als zweiter Analysewert ein auf die erste Spitze folgendes Tal ermittelt werden, wenn der ersten Spitze keine Unstetigkeit folgt,

In einem weiteren Analyseschritt kann aus der Differenz bzw. der Summe des ersten und des zweiten Analysewerts das von dem Volta-Potential der Bezugselektrode und der Metalloberfläche abhängige Signal und/oder der Abstand der Bezugselektrode zur Metalloberfläche ermittelt werden.

Insbesondere bevorzugt wird das Signal und/oder der Abstand der Bezugselektrode zur Metalloberfläche nach der Maßgabe ermittelt:

$$1. \quad V_{CPT} > 0 \wedge -V_b < V_{CPT} < V_b$$
$$k \cdot \left( \max_1 (|vm|) - \max_2 (|vm|) \right) = |V_b + V_{CPT}| - |-V_b + V_{CPT}| = 2V_{CPT}$$

$$2. \quad V_{CPT} < 0 \wedge -V_b < V_{CPT} < V_b$$
$$k \cdot \left( \max_1 (|vm|) - \max_2 (|vm|) \right) = |V_b - V_{CPT}| - |-V_b - V_{CPT}| = 2V_{CPT}$$

$$3. \quad V_{CPT} > 0 \wedge |V_{CPT}| > |V_b|$$
$$k \cdot \left( \max(|vm|) + \min(|vm|) \right) = |V_b + V_{CPT}| + |-V_b + V_{CPT}| = 2V_{CPT}$$

$$4. \quad V_{CPT} < 0 \wedge |V_{CPT}| > |V_b|$$
$$k \cdot \left( \max(|vm|) + \min(|vm|) \right) = |V_b - V_{CPT}| + |-V_b - V_{CPT}| = 2V_{CPT}$$

Wobei $V_b$ das sogenannte Backing-Potential und $V_{CPT}$ das Kontakt-Potential ist, während vm das modulierte Messsignal wiedergibt.

Die überlagerte Wechselspannung kann einen Offsetfaktor-Term aufweisen. Dieser Offsetfaktor-Term ist vorzugsweise einstellbar, Insbesondere bevorzugt wird der zweite Offsetfaktor derart eingestellt, dass der erste und der zweite Analysewert den gleichen Betrag aufweisen. Dies vereinfacht die Analyse der Signale.

Der bevorzugten Ausführungsform wird die Metalloberfläche antiparallel zur Achse der Schwingung bewegt. Insbesondere bevorzugt wird die Metalloberfläche senkrecht zur Achse der Schwingung bewegt. Die Bewegung der Metalloberfläche in antiparalleler Richtung zur Achse der Schwingung ermöglicht es, die Bezugselektrode verschiedenen Bereichen der Metalloberfläche gegenüberliegend anzuordnen und somit die gesamte Metalloberfläche zu untersuchen.

Insbesondere bevorzugt wird die Metalloberfläche mit sich ändernder Geschwindigkeit antiparallel zur Achse der Schwingung bewegt. So kann die Zeit zur Untersuchung der Metalloberfläche reduziert werden, wenn die Metalloberfläche in Bereichen, in denen die Signalanalyse keine oder nur geringe Änderungen des von dem Volta-Potential der Bezugselektrode und der Metalloberfläche abhängigen Signals bzw. des Abstands der Bezugselektrode zur Metalloberfläche ergibt, beschleunigt wird. In detailliert zu untersuchenden Bereichen, in denen beispielsweise das von dem Volta-Potential der Bezugselektrode und der Metalloberfläche abhängige Signal bzw. der Abstand der Bezugselektrode zur Metalloberfläche als sich stark ändernd ermittelt wird, kann die Bewegungsgeschwindigkeit reduziert bzw. auf einem niedrigen Niveau gehalten werden.

Die erfindungsgemäße Vorrichtung zum Untersuchen einer Metalloberfläche weist insbesondere bevorzugt eine Bezugselektrode, einen Schwingantrieb zum Erzeugen einer Schwingbewegung zwischen der Bezugselektrode und der zu untersuchenden Metalloberfläche, einen Stromkreis, der die durch die der Metalloberfläche gegenüberliegend angeordnete Bezugselektrode gebildete Kapazität und eine Spannungsquelle aufweist, eine Messeinrichtung zur Messung des zeitlichen Spannungsverlaufs in dem Stromkreis und mindestens eine Feder, die mit der Bezugselektrode verbunden ist und die Bezugselektrode in einer Halterung beweglich gelagert, auf.

Erfindungsgemäß wird insbesondere ein Sinussignal verwendet, das wie folgt dargestellt werden kann:

$$v_b = V_b \cdot \sin(\omega_2 \cdot t) + Offset_b$$

Dieses Backing-Signal ($\omega_2$ beispielsweise = 1 kHz) moduliert das Kelvin-Sonde-Signal ($\omega_1$ beispielsweise =1 kHz), das wie folgt dargestellt werden kann:

$$v_{SKP} = const \cdot V_{cpt} \cdot \frac{\Delta d}{d^2} \cdot \cos(\omega_1 \cdot t)$$

Das modulierte Signal lässt sich mit folgender Gleichung beschreiben:

$$v_m = const \cdot \left(V_{cpt} + V_b \cdot \sin(\omega_2 \cdot t)\right) \cdot \frac{\Delta d}{d^2} \cdot \sin(\omega_1 \cdot t),$$

wobei d der Abstand der Nadelspitze zur Probenoberfläche und d der mittlere Abstand ist. Der zeitliche Verlauf von diesem Signal hängt von dem $V_{CPT}$-Vorzeichen und dem Größenverhältnis von $V_{CPT}$ und $V_b$ ab.

Es lässt sich zwischen vier Fällen unterscheiden:

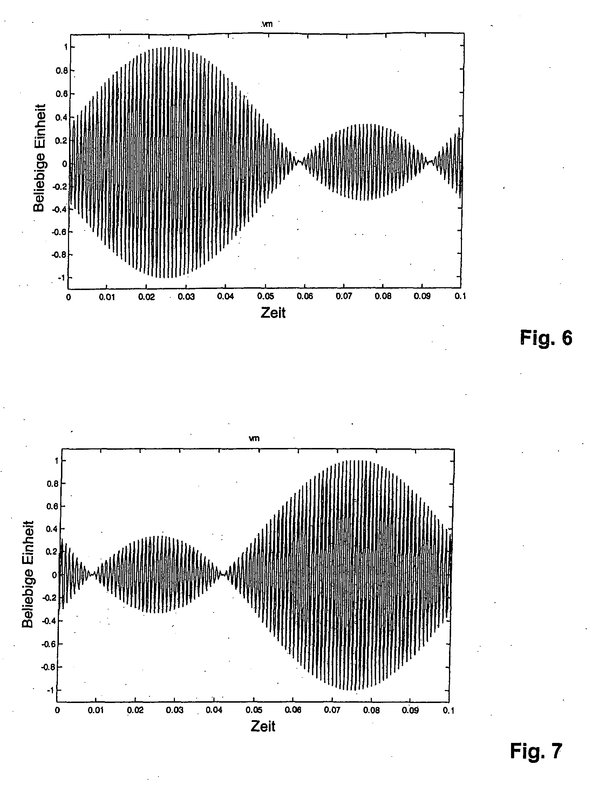

$$1. \quad V_{CPT} > 0 \wedge -V_b < V_{CPT} < V_b \quad Fig.6$$

$$2. \quad V_{CPT} < 0 \wedge -V_b < V_{CPT} < V_b \quad Fig.7$$

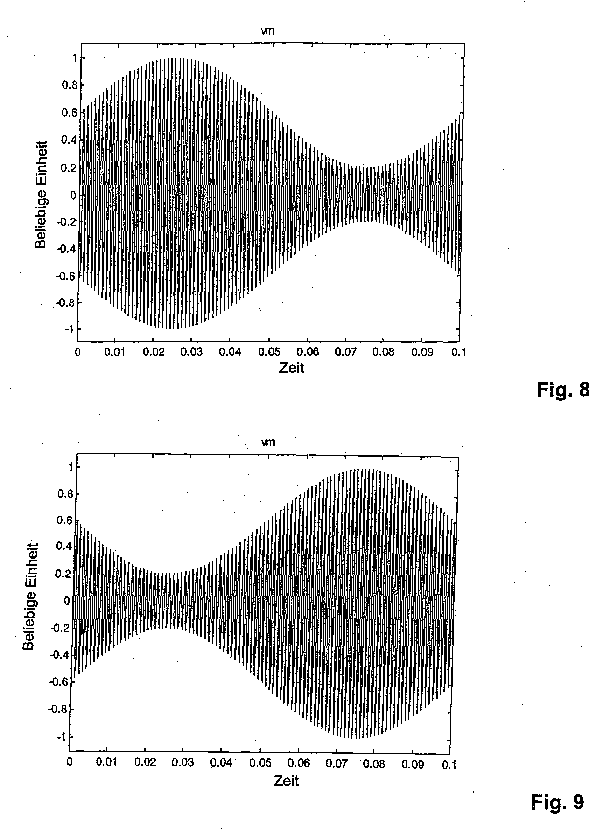

$$3. \quad V_{CPT} > 0 \wedge |V_{CPT}| > |Vb| \quad Fig.8$$

$$4. \quad V_{CPT} < 0 \wedge |V_{CPT}| > |Vb| \quad Fig.9$$

Die erfindungsgemäße Vorrichtung geht von dem Grundgedanken aus, dass eine Federlagerung eine weniger starre Aufhängung der Bezugselektrode bewirkt.

Damit werden Messungen auch außerhalb einer Anregung der Bezugselektrode mit ihrer Resonanzfrequenz möglich. Ferner wird durch die Federlagerung die Einstellung des mittleren Abstands der Bezugselektrode zur Metalloberfläche vereinfacht.

Als Bezugselektrode kann eine Nadel, insbesondere eine aus Edelstahl oder Platin hergestellte Nadel eingesetzt werden.

Die Bezugselektrode weist insbesondere bevorzugt einen Kabelkanal auf, der eine Führung eines Kabels entlang der Oberfläche oder innerhalb der Bezugselektrode ermöglicht, Ein in der Bezugselektrode geführtes Kabel wird durch die Bezugselektrode von äußeren Einflüssen abgeschirmt, so dass eine bessere Analyse eines dieses Kabel durchströmenden Signals möglich ist.

Insbesondere ist in oder auf der Bezugselektrode ein Vorverstärker angeordnet. Dieser wird insbesondere bevorzugt eher im Bereich der Nadelspitze angeordnet, so dass ein von der Messnadetspitze zum Vorverstärker führendes Kabel möglichst kurz gewählt werden kann. Durch die Implementierung eines Vorverstärkers auf der schwingenden Achse wird der Einfluss von parasitären Kapazitäten auf das Messergebnis bedeutend verringert.

In einer bevorzugten Ausführungsform ist der Vorverstärker in SMD-Technologie (Surface Mount Device) ausgeführt. Dies ermöglicht es, den vom Vorverstärker eingenommenen Raum zu reduzieren und erlaubt eine gute Anbringung des Vorverstärkers auf der Bezugselektrode.

Insbesondere bevorzugt weist der Vorverstärker einen "Bootstrap"-Aufbau auf. Durch diesen Aufbau wird die Eingangsimpedanz zur Quellimpedanz optimal angepasst, wobei der Eingangswiderstand auf das notwendige Minimum reduziert wird (Rauschminimalisierung).

Aufgrund der sehr hohen inneren Impedanz der Quelle (ca. 100 G$\Omega$), die hier aus der im elektrischen Feld der Probe schwingenden Nadel besteht, kann ein Separationsverstärker angewendet werden.

Um sich am besten an das Ausgangssignal der Quelle anzupassen, kann ein in der Bootstrap-Schaltung arbeitender Operationsverstärker verwendet werden. Daraus ergibt sich insbesondere ein selektiver Spannungsverstärker und Verlauf des modulierten Ausgangssignals.

In einer bevorzugten Ausführungsform ist dem Vorverstärker räumlich getrennt eine zweite Verstärkerstufe nachgeordnet. In einer bevorzugten Ausführungsform werden die elektrischen Leitungen von dem Vorverstärker zur zweiten Verstärkerstufe direkt durch die schwingende Achse geführt. Dadurch erzielt man eine gute Abschirmung und eine Verkürzung der Länge der elektrischen Leitungen und damit noch kleinere parasitäre Kapazitäten sowie die Vermeidung von Übersprechungen.

Insbesondere bevorzugt wird in dem Vorverstärker nur eine Stromverstärkung realisiert. Dadurch ist das Messsystem nicht gegenüber Magnetfeldern empfindlich. Eine Spannungsverstärkung kann in der zweiten Stufe realisiert werden, die beabstandet von dem Magnetfeld der Antriebsspule angeordnet werden kann, so dass die Einflüsse des Magnetfelds der Antriebsspule auf die Spannungsverstärkung minimiert werden.

In einer bevorzugten Ausführungsform weist der Schwingantrieb eine erste Spule auf. Es hat sich als vorteilhaft erwiesen, die Schwingung zwischen der Bezugselektrode und der Metalloberfläche durch Spulen und deren Einwirken auf die metallische Bezugselektrode zu erzeugen. Dies ermöglicht beispielsweise gegenüber mechanischen Antriebssystemen, die im unmittelbaren Kontakt mit der Bezugselektrode stehen, Schwingungen mit höheren Frequenzen zu erzeugen.

Insbesondere bevorzugt umgreift die erste Spule die Bezugselektrode, da hierdurch ein besonders kompakter Aufbau ermöglicht wird und ferner der Abstand zwischen der Spule und der Bezugselektrode gering gehalten werden kann, um so mit einer besonders großen Kraft auf die Bezugselektrode einwirken zu können.

In einer bevorzugten Ausführungsform weist der Schwingantrieb eine weitere, zweite Spule auf. Dies ermöglicht es, mit höheren Kräften auf die Bezugselektrode einzuwirken. Insbesondere bilden die erste und die zweite Spule eine bfilare Wicklung. Eine bifilare Wicklung von Spulen erzeugt eine doppelte magnetische Kraft bei gleichbleibender Stromstärke. Femer vermindert die bifilare Wicklung die Induktivität, wodurch Messungen bei höheren Frequenzen möglich werden, wodurch beispielsweise die Messzeit verkürzt werden kann.

In einer bevorzugten Ausführungsform ist ein Dauermagnet an der Bezugselektrode angebracht.

Die zur Lagerung der Bezugselektrode verwendete Feder kann in vielfacher Weise realisiert werden. Beispielsweise kann eine Stabfeder oder eine die Bezugselektrode umfassende Spiralfeder eingesetzt werden. Insbesondere bevorzugt wird als Feder ein gebogener Draht eingesetzt, dessen beiden Enden mit der Halterung verbunden ist und entlang dessen Verlauf eine Befestigung mit der Bezugselektrode erfolgt. Der Verlauf des gebogenen Drahts kann vielgestaltig sein. Insbesondere bevorzugt liegen die beiden Enden des gebogenen Drahts benachbart zueinander, wobei der Draht einen die benachbart zueinander angeordneten Enden verbindenden Bogen bildet; in einer bevorzugten Ausführungsform ist der gebogene Draht halb-elipsenartig ausgeführt.

In einer bevorzugten Ausführungsform werden die beiden Enden des gebogenen Drahts über eine elastische Fassung mit der Halterung verbunden, insbesondere mit einer Silikonfassung.

In einer bevorzugten Ausführungsform wird die Bezugselektrode über zwei einander gegenüberliegend angeordnete Federn gehalten, wobei die beiden Fedem beispielsweise in einer gleichen Ebene angeordnet sein können, jedoch auch beabstandet zueinander angeordnet sein können. Beide Federn werden insbesondere bevorzugt durch einen gebogenen Draht, insbesondere einen zu einer Halb-Elipse gebogenen Draht, gebildet.

In einer bevorzugten Ausführungsform wird die Bezugselektrode durch eine oder mehrere Federn oberhalb und eine oder mehrere Federn unterhalb der Spule in der Halterung gehalten.

Das erfindungsgemäße Verfahren und die erfindungsgemäße Vorrichtung können insbesondere bevorzugt zur Untersuchung von Korrosionsprozessen, zur Entwicklung von neuen Farben, Lacken und anderen Polymerbeschichtungen, zur Untersuchung von leitenden Materialien und Elektrodenoberflächen, beispielsweise auch von Festplatten, zur Messung von Bioströmen, insbesondere bei der Kommunikation zwischen lebenden Zellen, und beispielsweise zur Analyse von radioaktiven Substanzen eingesetzt werden.

Die Federn werden insbesondere als Edelstahl-Federn ausgebildet. Insbesondere bevorzugt sind die Edelstahl-Federn flexibel ausgebildet und weisen eine lineare Kennlinie auf. insbesondere weisen die Federn eine Linearität über den ganzen Auslenkungsbereich auf.

Nachfolgend wird die Erfindung anhand einer lediglich ein Ausführungsbeispiel darstellenden Zeichnung näher erläutert. Darin zeigen:

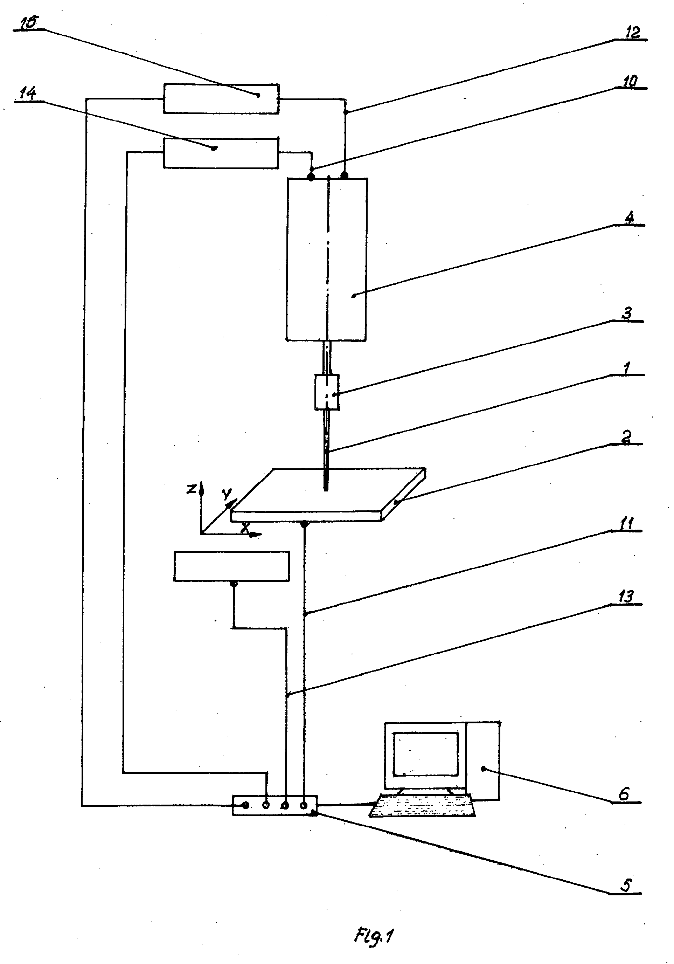

Fig. 1    den Aufbau einer Vorrichtung zum Untersuchen einer Metalloberfläche in einer schematischen Darstellung;

Fig. 2    das Magnet und Spulensystem der Vorrichtung gemäß Fig. 1 in einer schematischen Darstellung:

Fig.3    einen die durch in der Metallfläche gegenüberliegend angeordnete Bezugselektrode gebildete Kapazität enthaltenden Stromkreis mit einer Spannungsquelle für die zu überlagernde Wechselspannung in einer schematischen Darstellung;

**Fig. 4**    den vorderen Bereich eines Magnet- und Spulensystems der erfindungsgemäßen Vorrichtung in einer schematischen Schnittzeichnung;

**Fig. 5**    die die Bezugelektrode einer erfindungsgemäl3en Vorrichtung lagemden Federn in einer Schnittzeichnung entlang der Linie A-A in Fig. 4;

Fig. 6    die Darstellung eines modulierten Signals bei $V_{cpt}=0.5, Vb=1$, Phaseinversion bei $vb=V_{CPT}$:

Fig. 7    die Darstellung eines modulierten Signals bei $V_{cpt}=-0.5, Vb=1$, Phaseinversion bei $vb=V_{CPT}$:

**Fig. 8**    die Darstellung eines modulierten Signals bei $V_{cpt}=1.5, Vb=1$;

Fig. 9    die Darstellung eines modulierten Signals, $V_{cpt}=-1.5, Vb=1$;

Fig. 10    die Darstellung eines Systems aus Bootsstrap, selektivem Spannungsverstärker;

Fig. 11    die Darstellung des Betrags des modulierten Signals nach Integration, $V_{cpt}=0.5, Vb=1$;

Fig. 12    die Darstellung des Betrags des modulierten Signals nach Integration. $V_{cpt}=-0.5, Vb=1$;

Fig. 13    die Darstellung des Betrags des modulierten Signals nach Integration, $V_{cpt}=1.5, Vb=1$ und

Fig. 14    die Darstellung des Betrags des modulierten Signals nach Integration, $V_{cpt}=1.5, Vb=1$.

Die erfindungsgemäße Vorrichtung weist eine als Nadel ausgebildete Bezugselektrode 1 auf, die einer zu untersuchenden Metalloberfläche 2 gegenüberliegend angeordnet ist. Im Bereich der Nadelspitze der Bezugselektrode 1 ist auf der Bezugselektrode 1 ein Vorverstärker 3 angeordnet. Die Bezugselektrode 1 ist in einem Magnet- und Spulsystem 4 gehalten. Über eine Schnittstelle 5 ist ein Rechner 6 mit Leitungen verbunden. Über Leitungen 10 und 11 ist die Schnittstelle 5 mit der Spitze der Bezugselektrode 1 und der Metalloberfläche 2 verbunden. Leitung 12 symbolisiert die elektrische Verknüpfung eines durch das Magnet- und Spulsystem 4 bewirkten Schwingantriebs und einer Höhenregelung mit der Schnittstelle 5. Leitung 13 symbolisiert die Verbindung einer Motorsteuerung für die Bewegung der Metalloberfläche 2 relativ zur Bezugselektrode 1 mit der Schnittstelle 5.

In der Leitung 10 ist ein Messverstärker 14 vorgesehen. In der Verbindung 12 ist ein Leistungsverstärker 15 integriert.

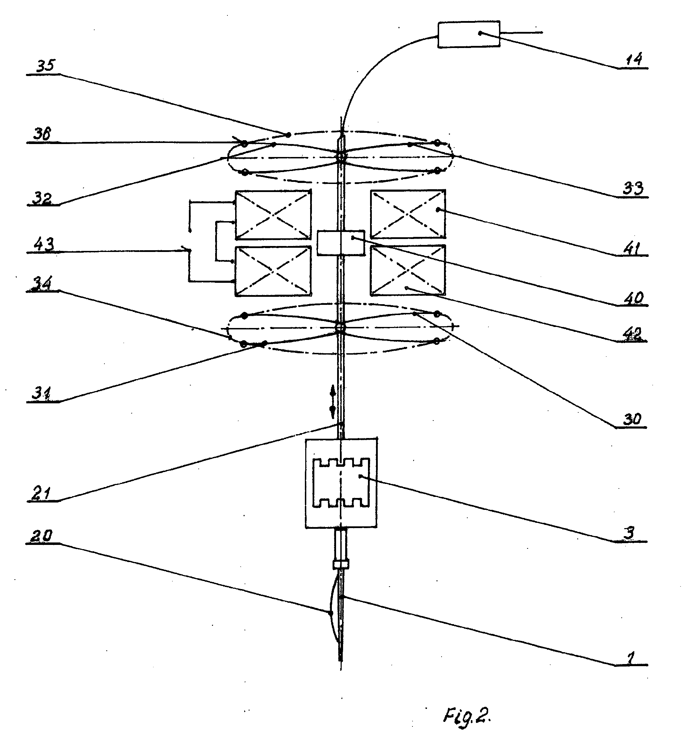

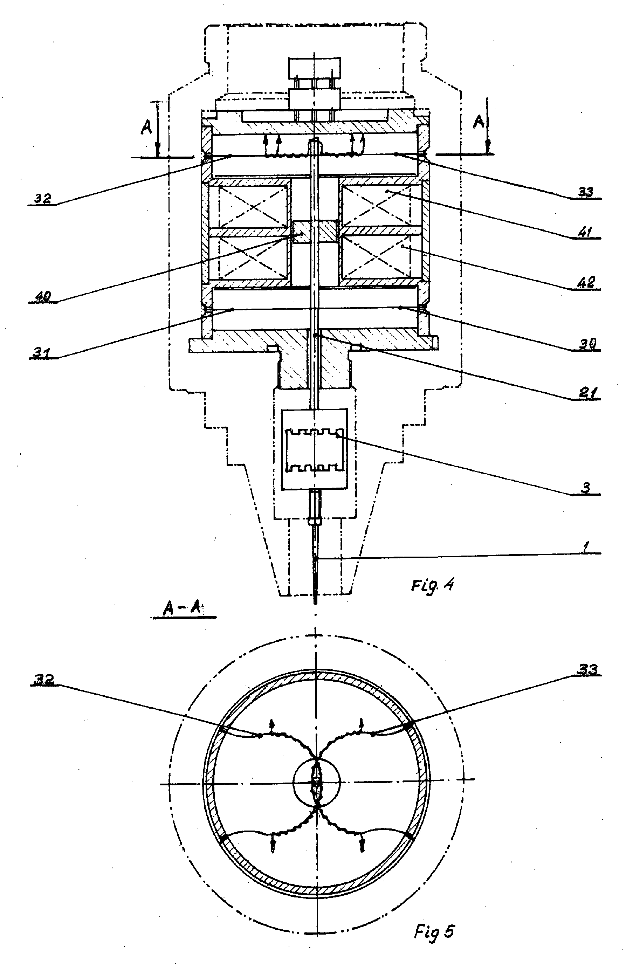

Fig. 2, 4 und 5 zeigen Details des Magnet- und Spulsystems 4, Eine Leitung 20 führt von der Spitze der Bezugselektrode 1 zu dem SMD-Vorverstärker 3. Diese Leitung 20 kann in einem nicht dargestellten, in der Bezugselektrode 1 ausgeführten innenliegenden Kanal geführt werden. Eine Leitung 21 führt insbesondere bevorzugt ebenfalls in einem innenliegend in der Bezugselektrode 1 ausgebildeten Kanal vom SMD-Vorverstärker 3 zu einem Messverstärker 14.

Die Bezugselektrode 1 wird durch Federn 30, 31, 32 und 33 in Halterungen 34 und 35 gehalten. Die Federn 30, 31 und 32, 33 sind einander gegenüberliegend angeordnet. Sie sind aus halb-eliptisch gebogenen Drähten hergestellt. Die jeweiligen Drähte werden in elastischen Fassungen 36 in den Halterungen 34, 35 gehalten.

Auf der Bezugselektrode 1 ist ein Dauermagnet 40 angeordnet. Spulen 41 und 42 umgeben die Bezugselektrode 1. Sie werden über einen schematisch dargestellten Leitungskreis 43 mit einer Spulenspannung beaufschlagt. Die Spulen 41 und 42 bilden eine bifilare Wicklung.

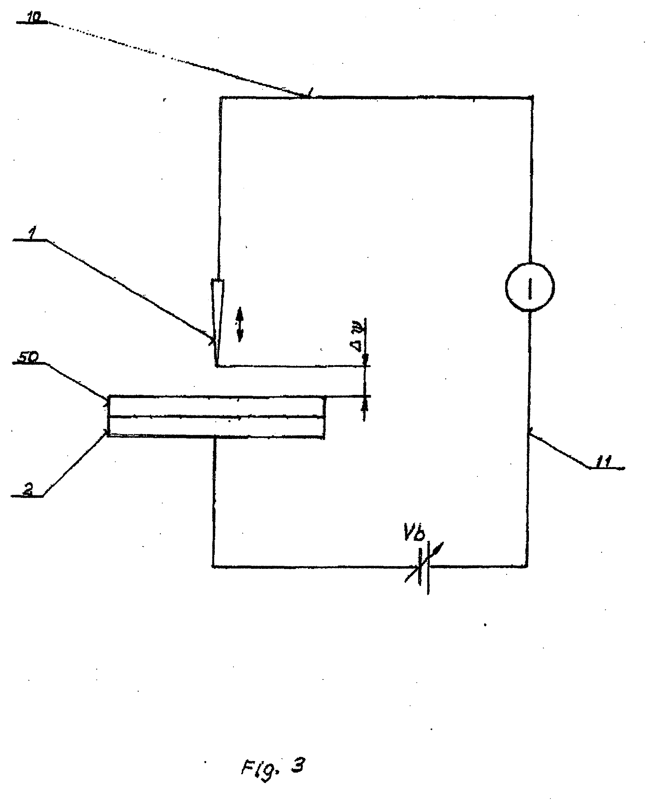

Fig. 3 beschreibt den durch die Metalloberfläche 2 gegenüberliegend angeordnete Bezugselektrode 1 gebildete Kapazität enthaltenden Stromkreis mit den Leitungen 10 und 11. In der Ausführung der Fig. 3 ist das Metall mit einer Polymerbeschichtung 50 versehen. Zwischen der Masse und der zu untersuchenden Metalloberfläche 2 wird eine Wechselspannung $V_b$ angelegt.

Das schwingende System wird mit dem Wechselstrom ($\omega_1$=1kHz)

$$i_{sp} = I_{sp} \cdot \dot{\sin}(\omega_1 \cdot t),$$

der durch die Spule fließt, zum Schwingen gebracht.

Daraus resuttiert ein Kelvin-Sonde-Signal:

$$v_{SKP} = const \cdot V_{cpt} \cdot \frac{\Delta d}{d^2} \cdot \cos(\omega_1 \cdot t)$$

Dieses Signal wird dann mit der Wechselspannung ($\omega_2$=10Hz), das zwischen der Masse und der zu untersuchenden Probe angelegt ist, moduliert,

$$v_b = V_b \cdot \sin(\omega_2 \cdot t)$$

Das modulierte Signal lässt sich mit folgender Gleichung beschreiben:

$$v_m = const \cdot \left( V_{cpt} + V_b \cdot \sin(\omega_2 \cdot t) \right) \cdot \frac{\Delta d}{d^2} \cdot \sin(\omega_2 \cdot t)$$

Der zeitliche Verlauf von diesem Signal hängt von dem $V_{CPT}$ - Vorzeichen und dem Größenverhältnis von $V_{CPT}$ und $V_b$ ab.

Es lässt sich zwischen vier Fällen unterscheiden:

$$1. \; V_{CPT} > 0 \wedge -V_b < V_{CPT} < V_b \qquad (Fig. 6)$$

$$2. \; V_{CPT} < 0 \wedge -V_b < V_{CPT} < V_b \qquad (Fig. 7)$$

$$3. \; V_{CPT} > 0 \wedge |V_{CPT}| > |V_b| \qquad (Fig. 8)$$

$$4.\ V_{CPT} < 0 \wedge |V_{CPT}| > |Vb| \qquad \text{(Fig. 9)}$$

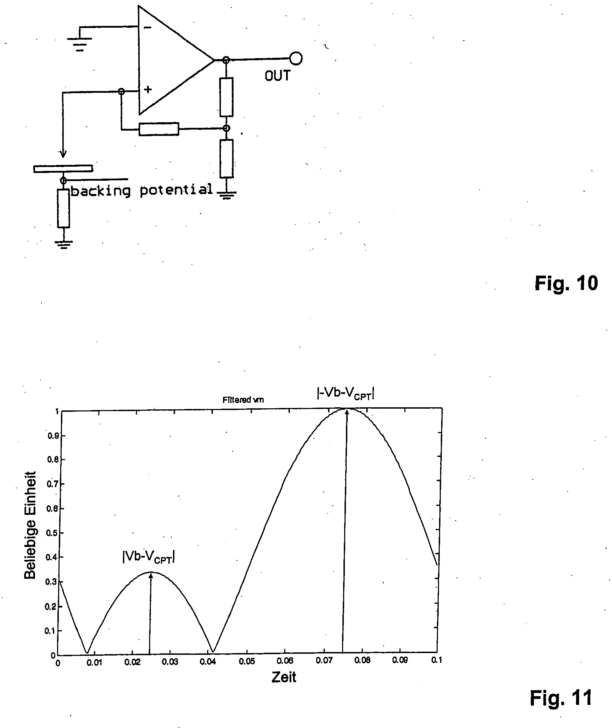

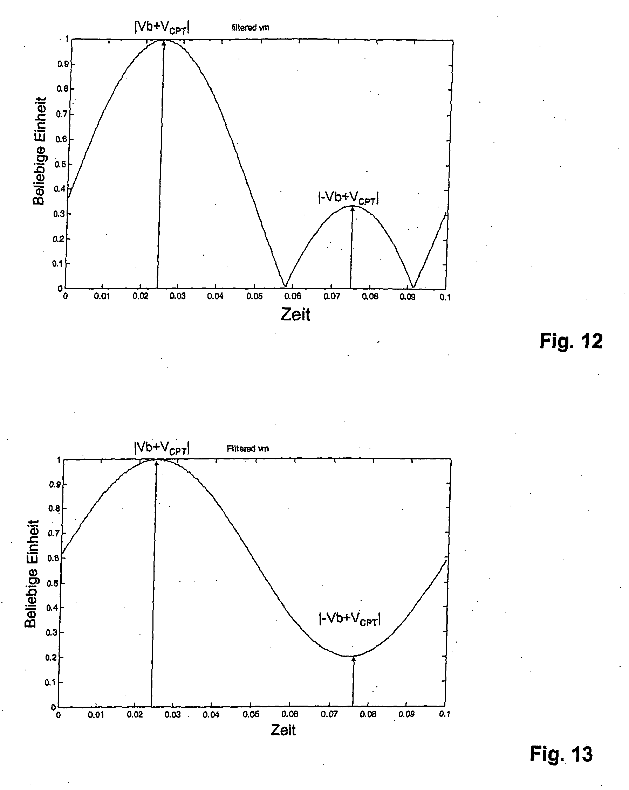

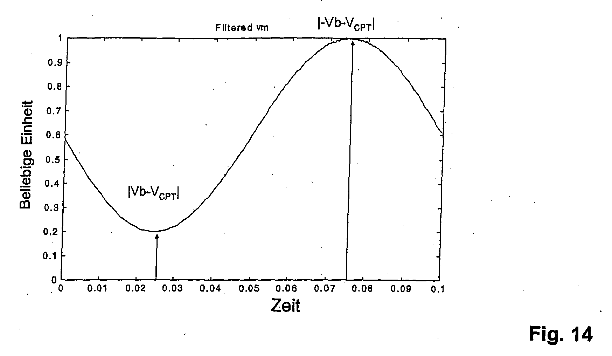

Wenn man dann ein Betrag von dem modulierten Signal bildet und es einschließlich integriert, bekommt man ein 10 Hz-Signal, dessen zeitlicher Verlauf in den Fig. 11 bis 14 dargestellt wurde.

Bei optimalem Abstand (Sampie-Probe) wird einmalig ein Norrnierungsfaktor "k" aus den unten aufgelisteten Gleichungen berechnet:

$$1.\quad V_{CPT} > 0 \wedge -V_b < V_{CPT} < V_b$$
$$k \cdot \left(\max_1(|vm|) + \max_2(|vm|)\right) = |V_b + V_{CPT}| + |-V_b + V_{CPT}| = 2V_b$$

$$2.\quad V_{CPT} < 0 \wedge -V_b < V_{CPT} < V_b$$
$$k \cdot \left(\max_1(|vm|) + \max_2(|vm|)\right) = |V_b - V_{CPT}| + |-V_b - V_{CPT}| = 2V_b$$

$$3.\quad V_{CPT} > 0 \wedge |V_{CPT}| > |V_b|$$
$$k \cdot \left(\max(|vm|) - \min(|vm|)\right) = |V_b + V_{CPT}| - |-V_b + V_{CPT}| = 2V_b$$

$$4.\quad V_{CPT} < 0 \wedge |V_{CPT}| > |V_b|$$
$$k \cdot \left(\max(|vm|) - \min(|vm|)\right) = |V_b - V_{CPT}| - |-V_b - V_{CPT}| = 2V_b$$

Man führ jetzt einen Parameter $\Delta = 2V_b/k$, der nur von dem Abstand zwischen der Nadel in der Probe abhängig ist, ein. Man hält diesen Parameter während der Messung konstant, so dass auch der Abstand zwischen Probe und Nadel konstant gehalten wird.

Unter diesen Bedingungen ist es dann möglich, $V_{CPT}$ aus den fölgenden Gleichungen zu ermitteln:

$$1.\quad V_{CPT} > 0 \wedge -V_b < V_{CPT} < V_b$$
$$k \cdot \left(\max_1(|vm|) - \max_2(|vm|)\right) = |V_b + V_{CPT}| - |-V_b + V_{CPT}| = 2V_{CPT}$$

$$2.\quad V_{CPT} < 0 \wedge -V_b < V_{CPT} < V_b$$
$$k \cdot \left(\max_1(|vm|) - \max_2(|vm|)\right) = |V_b - V_{CPT}| - |-V_b - V_{CPT}| = 2V_{CPT}$$

$$3.\quad V_{CPT} > 0 \wedge |V_{CPT}| > |V_b|$$
$$k \cdot \left(\max(|vm|) + \min(|vm|)\right) = |V_b + V_{CPT}| + |-V_b + V_{CPT}| = 2V_{CPT}$$

$$4.\quad V_{CPT} < 0 \wedge |V_{CPT}| > |V_b|$$
$$k \cdot \left(\max(|vm|) + \min(|vm|)\right) = |V_b - V_{CPT}| + |-V_b - V_{CPT}| = 2V_{CPT}$$

Bei dieser Messmethode ist der Messfehler noch einmal minimalisiert weil, man für die Berechnung der Messgröße nur zwei eindeutige und gut definierte Messpunkte nimmt, die Extrema des modulierten Signals darstellen.

Um die Messpräzision weiter zu erhöhen, wird noch die nichtlineare Regression des Messsignals eingeführt.

**Patentansprüche**

1. Verfahren zum Untersuchen einer Metalloberfläche, **dadurch gekennzeichnet, dass** eine Schwingung zwischen einer Bezugselektrode (1) und der Metalloberfläche (2) erzeugt wird, an einen die durch die der Metalloberfläche gegenüberliegend angeordnete Bezugselektrode (1) gebildete Kapazität enthaltenden Stromkreis eine Wechselspannung angelegt wird, als Messsignal der zeitliche Spannungsverlauf in dem Stromkreis gemessen wird und aus dem Spannungsverlauf das Volta-Potential zwischen der Metalloberfläche (2) und der Bezugselektrode (1) und/oder der Abstand der Bezugselektrode (1) zur Metalloberfläche (2) ermittelt wird.

2. Verfahren nach Anspruch 1, **dadurch gekennzeichnet, dass** die Bezugselektrode (1) durch einen Schwingantrieb zu einer mit einer sinusförmigen Schwingung angeregt wird.

3. Verfahren nach Anspruch 1 oder 2, **dadurch gekennzeichnet, dass** an eine zur Schwingungsanregung im Bereich der beweglich gelagerten Bezugselektrode (1) angeordneten Spule (41, 42) ein zu $\sin(\omega_1 t)$ proportionale Spulenspannung angelegt wird, wobei $\omega_1$ die Schwingfrequenz des Außenkreises ist.

4. Verfahren nach Anspruch 3, **dadurch gekennzeichnet, dass** die Spulenspannung zur Distanzeinstellung der Bezugselektrode (1) zur Metalloberfläche (2) von einem einstellbaren ersten Offsetfaktor abhängt.

5. Verfahren nach einem der Ansprüche 1 bis 3, **dadurch gekennzeichnet. dass** die überlagerte Wechselspannung zu $\sin(\omega_2 t)$ abhängig ist, wobei $\omega_2$ die Schwingfrequenz des Innenkreises ist.

6. Verfahren nach einem der Ansprüche 1 bis 5, **dadurch gekennzeichnet, dass** ein Peaksignal durch Auffinden und Verbinden der Spitzen des Messsignals erzeugt wird.

7. Verfahren nach Anspruch 6, **dadurch gekennzeichnet, dass** das Peaksignal integriert wird.

8. Verfahren nach Anspruch 7, **dadurch gekennzeichnet, dass** das integrierte Peaksignal geglättet wird.

9. Verfahren nach Anspruch 7 oder 8, **dadurch gekennzeichnet, dass** als erster Analysewert eine erste Spitze des integrierten Peaksignals ermittelt wird und als zweiter Analysewert eine auf die erste Spitze folgende zweite Spitze ermittelt wird, wenn das Peaksignal zwischen der ersten Spitze und der zweiten Spitze eine Unstetigkeit aufweist oder als zweiter Analysewert ein auf die erste Spitze folgendes Tal ermittelt wird, wenn der ersten Spitze keine Unstetigkeit folgt.

10. Verfahren nach Anspruch 9, **dadurch gekennzeichnet, dass** aus der Differenz und der Summe des ersten und des zweiten Analysewerts das Volta-Potential und/oder der Abstand der Bezugselektrode (1) zur Metalloberfläche (2) ermittelt wird.

11. Verfahren nach Anspruch 10, **dadurch gekennzeichnet, dass** das Volta-Potential und/oder der Abstand der Bezugselektrode (1) zur Metalloberfläche (2) nach der Maßgabe ermittelt wird:

$$1. \quad V_{CPT} > 0 \wedge -V_0 < V_{CPT} < V_0$$
$$k \cdot \left( \max_1 (vm) - \max_2 (vm) \right) = |V_0 + V_{CPT}| - |-V_0 + V_{CPT}| = 2V_{CPT}$$

$$2. \quad V_{CPT} < 0 \wedge -V_0 < V_{CPT} < V_0$$
$$k \cdot \left( \max_1 (vm) - \max_2 (vm) \right) = |V_0 - V_{CPT}| - |-V_0 - V_{CPT}| = 2V_{CPT}$$

$$3. \quad V_{CPT} > 0 \wedge |V_{CPT}| > |V_s|$$
$$k \cdot \left( \max(|vm|) + \min(|vm|) \right) = |V_s + V_{CPT}| + |-V_s + V_{CPT}| = 2V_{CPT}$$

$$4. \quad V_{CPT} < 0 \wedge |V_{CPT}| > |V_s|$$
$$k \cdot \left( \max(|vm|) + \min(|vm|) \right) = |V_s - V_{CPT}| + |-V_s - V_{CPT}| = 2V_{CPT}$$

**12.** Verfahren nach einem der Ansprüche 1 bis 11, **dadurch gekennzeichnet, dass** die überlagerte Wechselspannung von einem einstellbaren zweiten Offsetfaktor abhängig ist.

**13.** Verfahren nach Anspruch 12, **dadurch gekennzeichnet, dass** der zweite Offsetfaktor derart eingestellt wird, dass der erste und der zweite Analysewert den gleichen Betrag aufweisen.

**14.** Verfahren nach einem der Ansprüche 1 bis 13, **dadurch gekennzeichnet. dass** die Metalloberfläche (1) antiparallel zur Achse der Schwingung bewegt wird.

**15.** Verfahren nach Anspruch 14, **dadurch gekennzeichnet, dass** die Metalloberfläche (2) mit sich ändernder Geschwindigkeit antiparallel zur Achse der Schwingung bewegt wird.

**16.** Vorrichtung zur Durchführung eines Verfahrens nach einem der Ansprüche 1 bis 15.

**17.** Vorrichtung zum Untersuchen einer Metalloberfläche (2) mit

- einer Bezugselektrode (1),
- einem Schwingantrieb zum Erzeugen einer Schwingbewegung zwischen der Bezugelektrode (1) und der zu untersuchenden Metalloberfläche (2),
- einem Stromkreis, der durch die der Metalloberfläche (2) gegenüberliegend angeordnete Bezugselektrode (1) gebildete Kapazität und eine Spannungsquelle aufweist,
- einer Messeinrichtung zur Messung des zeitlichen Spannungsverlaufs in dem Stromkreis,
- mindestens eine Feder (30, 31, 32, 33), die mit der Bezugselektrode (1) verbunden ist und die Bezugselektrode (1) in einer Halterung (34, 35) beweglich lagert.

**18.** Vorrichtung nach Anspruch 17, **dadurch gekennzeichnet, dass** die Bezugselektrod (1) eine Nadel ist.

**19.** Vorrichtung nach Anspruch 17 oder 18. **dadurch gekennzeichnet, dass** die Bezugselektrode (1) aus Platin, Edelstahl, Gold oder mindestens einer Kohlenstoffifaser ist.

**20.** Vorrichtung nach einem der Ansprüche 17 bis 19, **dadurch gekennzeichnet, dass** die Bezugselektrode (1) einen Kabelkanal aufweist.

**21.** Vorrichtung nach einem der Ansprüche 17 bis 20, **dadurch gekennzeichnet, dass** ein Vorverstärker (3) in oder auf der Bezugselektrode (1) angeordnet ist.

**22.** Vorrichtung nach Anspruch 21, **dadurch gekennzeichnet, dass** der Vorverstärker (3) in SMD-Technologie ausgeführt ist.

**23.** Vorrichtung nach Anspruch 21 oder 22, **dadurch gekennzeichnet, dass** der Vorverstärker (3) nach einem Bootstrap"-Aufbau ausgeführt ist.

**24.** Vorrichtung nach einem der Ansprüche 17 bis 23, **dadurch gekennzeichnet, dass** der Schwingantrieb eine erste Spule aufweist.

**25.** Vorrichtung nach Anspruch 24, **dadurch gekennzeichnet, dass** die erste Spule (41, 42) die Bezugselektrode (1) umgreift.

**26.** Vorrichtung nach Anspruch 24 oder 25, **dadurch gekennzeichnet, dass** der Schwingantrieb eine zweite Spule (41, 42) aufweist.

**27.** Vorrichtung nach Anspruch 26, **dadurch gekennzeichnet, dass** die erste und die zweite Spule (41. 42) eine bifilare Wicklung bilden.

**28.** Vorrichtung nach einem der Ansprüche 17 bis 27, **dadurch gekennzeichnet, dass** ein Dauermagnet (40) an Bezugselektrode angebracht ist.

**29.** Vorrichtung nach einem der Ansprüche 17 bis 28, **dadurch gekennzeichnet, dass** die Feder (30, 31; 32, 33) zu einer Halb-Elipse gebogener Draht ist, dessen beiden Enden mit der Halterung (34, 35) verbunden sind.

**30.** Vorrichtung nach Anspruch 29, **dadurch gekennzeichnet, dass** die beiden Enden der Halb-Elipse über eine elastische Fassung (36) mit der Halterung (34, 35) verbunden sind.

**31.** Vorrichtung nach Anspruch 29 oder 30, **dadurch gekennzeichnet, dass** zwei Federn (30, 31;32, 33) einander gegenüberliegend angeordnet sind und beide Federn (30, 31;32, 33) mit der Bezugselektrode (1) verbunden sind und beide Federn (30, 31;32, 33) jeweils durch einen zu einer Halb-Elipse gebogenen Draht gebildet werden.

**32.** Vorrichtung nach einem der Ansprüche 23 bis 31, **dadurch gekennzeichnet, dass** die Bezugselektrode durch eine Feder (32, 33) oberhalb und eine Feder (30, 31) unterhalb der Spule (41, 42) in der Halterung (34, 35) gehalten wird.

**33.** Verwendung des Verfahrens nach einem der Ansprüche 1 bis 19 und/oder einer Vorrichtung nach einem der Ansprüche 16 bis 32 zur

- Untersuchung von Korrosionsprozessen,
- Entwicklung von neuen Farben, Lacken und anderen Polymerbeschichtungen,
- Untersuchung von leitenden Materialien und Elektrodenoberflächen,
- Messung von Biostromen, insbesondere bei der Kommunikation zwischen lebenden Zellen,
- Analyse von radioaktiven Substanzen,
- Untersuchungen von Fingerabdrücken auf Metalloberflächen,
- Identifizierung von Farbstoffen für Geldscheine und anderen Wertpapieren und/oder
- Untersuchung der Topographie von Metalloberflächen:

Fig. 1

Fig.2.

Fig. 3

Fig. 4

A - A

Fig 5

Fig. 6

Fig. 7

Fig. 8

Fig. 9

**Fig. 10**

Filtered vm

$|-Vb-V_{CPT}|$

Beliebige Einheit

$|Vb-V_{CPT}|$

Zeit

**Fig. 11**

Fig. 12

Fig. 13

Fig. 14

**Europäisches Patentamt**

# EUROPÄISCHER RECHERCHENBERICHT

Nummer der Anmeldung

EP 06 00 0824

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | BAIKIE I D ET AL: "Low cost PC based scanning Kelvin probe" REVIEW OF SCIENTIFIC INSTRUMENTS, AMERICAN INSTITUTE OF PHYSICS, US, Bd. 69, Nr. 11, November 1998 (1998-11), Seiten 3902-3907, XP012036124 ISSN: 0034-6748 * das ganze Dokument * ----- | 1-33 | INV. G01N27/00 |
| A | TAYLOR D M: "Measuring techniques for electrostatics" JOURNAL OF ELECTROSTATICS, ELSEVIER SCIENCE PUBLISHERS B.V. AMSTERDAM, NL, Bd. 51-52, Mai 2001 (2001-05), Seiten 502-508, XP004341115 ISSN: 0304-3886 * siehe Kapitel 5. "Vibrating plate and Kelvin probe voltmeters" * ----- | 1,2,5, 12,14, 17,18 | |
| A | WO 01/90749 A (SENSORCHEM INTERNATIONAL CORPORATION; THOMPSON, MICHAEL; CHERAN, LARIS) 29. November 2001 (2001-11-29) * Seite 10, Zeile 26 - Seite 13, Zeile 9; Abbildungen 1,2 * ----- | 1,17,18 | RECHERCHIERTE SACHGEBIETE (IPC) G01N |

Der vorliegende Recherchenbericht wurde für alle Patentansprüche erstellt

| Recherchenort | Abschlußdatum der Recherche | Prüfer |
|---|---|---|
| München | 10. Mai 2006 | Meyer, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................

& : Mitglied der gleichen Patentfamilie, übereinstimmendes Dokument

EPO FORM 1503 03.82 (P04C03)

**EP 1 681 563 A1**

### ANHANG ZUM EUROPÄISCHEN RECHERCHENBERICHT
### ÜBER DIE EUROPÄISCHE PATENTANMELDUNG NR.

EP 06 00 0824

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2006

| Im Recherchenbericht angeführtes Patentdokument | Datum der Veröffentlichung | Mitglied(er) der Patentfamilie | Datum der Veröffentlichung |
|---|---|---|---|
| WO 0190749 A | 29-11-2001 | AU 6194701 A | 03-12-2001 |
| | | AU 6194801 A | 03-12-2001 |
| | | WO 0190730 A2 | 29-11-2001 |
| | | CA 2309412 A1 | 24-11-2001 |
| | | EP 1295119 A2 | 26-03-2003 |
| | | US 2003175945 A1 | 18-09-2003 |
| | | US 2004029131 A1 | 12-02-2004 |
| | | US 2006089825 A1 | 27-04-2006 |

EPO FORM P0461

Für nähere Einzelheiten zu diesem Anhang : siehe Amtsblatt des Europäischen Patentamts, Nr.12/82

22